# EUROPEAN PATENT SPECIFICATION

(11) **EP 2 827 557 B1**
(45) Date of publication and mention of the grant of the patent: **18.03.2020**
(21) Application number: 13306041.8
(22) Date of filing: 19.07.2013
(51) Int. Cl.: H04L 29/08, H04L 29/06

(54) **Automated application metric selection for multi-cost ALTO queries**
Automatisierte Anwendungsmetrikauswahl für ALTO-Anfragen mit mehreren Kosten
Sélection de métrique d'application automatisée pour des requêtes Multi-Cost ALTO

(43) Date of publication of application: 21.01.2015
(73) Proprietor: Alcatel Lucent, 91620 Nozay (FR)
(72) Inventor: Randriamasy, Sabine, 91620 Nozay (FR); Lafragette, Jean-Luc, 91620 Nozay (FR)
(74) Representative: Novagraaf Technologies

(56) References cited:
- WO-A1-2012/138817
- "3rd Generation Partnership Project; Technical Specification Group Services and System Aspects; Feasibility study on IP Multimedia Subsystem (IMS) based peer-to-peer content distribution services; Stage 2 (Release 12)", 3GPP STANDARD; 3GPP TR 23.844, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 22 June 2012 (2012-06-22), pages 1-41, XP050580730, [retrieved on 2012-06-22]
- RANDRIAMASY S ET AL: "Multi-Cost ALTO; draft-randriamasy-alto-multi-cost-07.txt", MULTI-COST ALTO; DRAFT-RANDRIAMASY-ALTO-MULTI-COST-07.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2012 (2012-10-19), pages 1-37, XP015088131, [retrieved on 2012-10-19]

## Description

### FIELD OF THE INVENTION

The present invention relates to methods and systems for managing the quality-of-experience for content delivery applications.

### BACKGROUND OF THE INVENTION

Internet usage is increasing rapidly all over the globe and tends to be ubiquitous and accessible from various end-user devices, leading to an ever evolving data exchange, often downloading as much as uploading. Therefore, Internet services are expected to cope with mobility of end-users, massive service requests, and heterogeneous access technologies, while ensuring the best possible Quality-of-experience (QoE) to each user.

QoE shall be regarded as the manner in which the user perceives the quality of an application session in terms, for example, of latency, bit rate, freeze or rebuffering, impaired audio/video frames, or application packet loss. More generally, QoE reflects the overall acceptability (i.e. sensation, perception, satisfaction) and opinion of users as they interact with the experienced service(s).

It follows that an accurate description of the qualitative performance of a content delivery application is more than ever of current interest for network operators. Such measure is particularly important for content delivery applications that are highly demanding on QoE. In fact, content delivery applications must often choose one or more suitable candidates from a selection of peers offering the same resource or service. The chosen candidate(s) for serving a user request has/have a direct impact on the experienced quality.

Accordingly, operators of application networks such as CDN endeavor to improve the QoE of their applications (such as video download or streaming) while transport network operators, i.e. ISPs, aim at minimizing the ever increasing transport costs induced by contemporary applications. The term "application", as used herein, is meant to include any service provided by at least a network endpoint over a communication network such as P2P applications, real-time communications, Content delivery networks, on-demand video services, files sharing, content downloading, multimedia streaming, IPTV, cloud-based applications, or virtual applications involving several physical servers.

In this regard, IETF has proposed a method for Application-Layer Traffic Optimization (ALTO). The ALTO IETF client-server protocol provides applications with guidance to select target endpoint(s) (i.e. peers, hosts, or application servers) from a set of candidates that are able to provide a desired data resource. This guidance is based on parameters that affect performance and efficiency of the data transmission between the hosts (such as the topological distance). ALTO is a client-server protocol that allows selection of application endpoints (AEP) with respect to several possible cost metrics such as routing cost, hop-count or, more generally, any other metric that crucially impacts the user QoE and the ISP network resources usage. By AEP is meant here a server, a datacenter, a cache, a cluster of server, or more generally a source of a certain service and/or resource.

ALTO is gaining traction among Internet Service providers (ISPs) as ALTO information abstracts their network topology and expresses their preferences with respect to routing costs and metrics impacting QoE such as hop-count, bandwidth and packet loss. Provision by ISPs of ALTO Costs on their topology via routing protocols is widely admitted and ALTO information is to be provided as well by CDN and Cloud providers or Data Center operators for their customers.

The question of which metric to choose to select potential AEPs is out of scope of the ALTO protocol. This choice depends on the impact of the metric on the QoE of a given application and also on the transport protocol used by application servers.

Nevertheless, given the high frequency of AEP selections done by applications and their diversity, a problem to solve is how to assure an online choosing method of selection metrics of AEPs. In other words, how to automate the choice of the selection metrics for AEPs, given the metrics supported by an ALTO server?

In fact, the decision on which ALTO metric to choose to evaluate the AEPs is outside of the ALTO protocol and left to the applications and there is no known online (i.e. automated) mechanism for selecting these metrics with respect to the needs of the application.

Moreover, a same application may be provided by different providers respectively with different protocols. Accordingly, a metric selection depending on the AEP is further required.

Yet another problem is that network conditions may change throughout time which may require appropriate updated AEP selection metrics. For example, during low traffic periods at night when no network maintenance occurs, it may be unnecessary to integrate bandwidth in the AEP selection and the routing cost metric may be sufficient.

3GPP TR 23.844 V12.0.0 and WO 2012/138817 A1 disclose using ALTO in a 3GPP IMS network and in a wireless peer-to-peer network respectively. IETF draft-randriamasy-alto-multi-cost-07 proposes an enhancement of the core ALTO protocol to support multi-cost queries.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later. Some embodiments provide methods and apparatus for automatically mapping a selection of evaluation metrics to a selection of candidate application endpoints, among a set of metrics supported by an ALTO Server.

Some embodiments provide explicit methods for performance metrics selection.

Some embodiments provide methods and apparatus supporting a multi-criteria AEP selection function.

Some embodiments provide methods and apparatus for automatically (and not manually) choosing AEP selection metrics.

Some embodiments provide methods and apparatus for automated application metrics selection for multi-cost ALTO queries.

Some embodiments provide online methods for automatically mapping candidate AEPs to a set of one or more AEP selection metrics that are used as input to ALTO request.

Various embodiments relate to systems for choosing at least a cost metric for an application endpoint selection in response to an application service request, this system comprising a look-up table configured for mapping a group of candidate application endpoints for serving the application service request to a configuration pointer, this configuration pointer pointing to predefined configuration data, these configuration data including at least a cost metric on the basis of which an application endpoint is to be selected among the group of candidate application endpoints.

In accordance with one broad aspect, the above system further comprise
- a candidate application endpoint gathering module configured to gather candidate application endpoints to serve an application service request. The candidate application endpoint gathering module is further configured to group gathered candidate application endpoints into groups of application endpoints according to predefined attributes including the application service type and the transport protocol of the requested application service;
- means for formulating the pointed configuration data into a multi-cost metrics request or several single cost metric requests to be transmitted to an Application-Layer Traffic Optimization (ALTO) server;
- a multi-criteria application endpoint ranking module configured to evaluate returned values by the ALTO server for the requested metrics in order to select an application endpoint among the group of candidate application endpoints;
- a database configured to store the pointed configuration data. This database is further configured to store the applicable timeframe for the pointed configuration data.
- an application metric mapping configuration module configured to define and to update the configuration data and their applicable timeframe. This application metric mapping configuration module is further configured to retrieve, from an Application-Layer Traffic Optimization server, information resources directory in order to get the set of supported cost metrics.

In accordance with one broad aspect, the configuration data comprise a mode associated to the cost metric, this mode requesting a numeral value or a ranking for the cost metric.

Further, various embodiments relate to methods for choosing at least a cost metric for an application endpoint selection in response to an application service request, this method comprising a mapping step of a group of candidate application endpoints for serving the application service request to a configuration pointer, this configuration pointer pointing to predefined configuration data, these configuration data including at least a cost metric on the basis of which an application endpoint is to be selected among the group of candidate application endpoints.

In accordance with one broad aspect, the above methods further comprise the following steps:
- gathering candidate application endpoints to serve the application service request;
- grouping the gathered candidate application endpoints into groups of application endpoints according to predefined attributes ;
- formulating the pointed configuration data into a multi-cost metrics request or several single cost metric requests to be transmitted to an Application-Layer Traffic Optimization server;
- evaluating the returned values by the Application-Layer Traffic Optimization server for the requested metrics in order to select an application endpoint among the group of candidate application endpoints.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

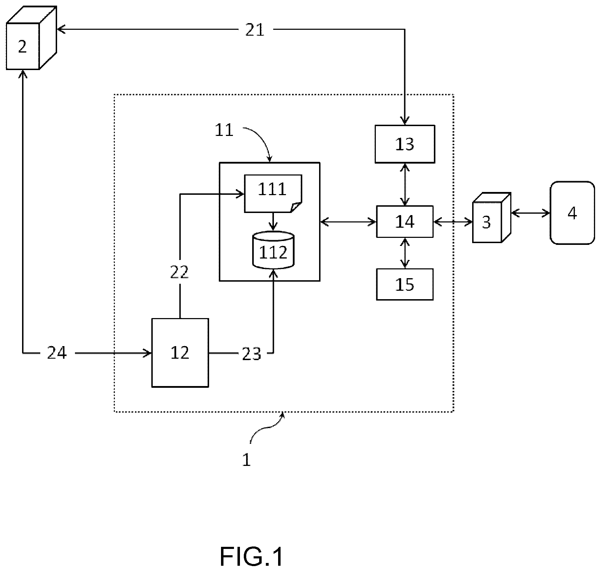

The objects, advantages and other features of various embodiments will become more apparent from the following disclosure and claims. The following non-restrictive description of preferred embodiments is given for the purpose of exemplification only with reference to the accompanying drawing in which FIG. 1 is a schematic diagram illustrating functional components according to various embodiments.

### DETAILED DESCRIPTION OF ILLUSTRATIVE EMBODIMENTS

With reference to figure 1, there are shown functional modules of an Automated Application Metrics Selection (AAMS) system **1** and their interaction with an ALTO server **2**, and a candidate AEPs gathering module **3.**

The candidate AEPs gathering module **3** is configured to gather the possible (i.e. feasible) AEPs in response to a certain application service requested by a client endpoint **4.** This candidate AEPs gathering module **3** may be, for example, a DNS resolver, a DHT (Distributed Hash Table) or, more generally, any request routing system able to gather IP addresses (or any other distinctive identifier) of AEPs providing a certain application service to a client endpoint **4.**

The set of AEPs gathered by the candidate AEPs gathering module **3** - and for which ALTO information are available - are cached, then grouped into different groups (i.e. classes) of AEPs. This classification may be performed according to predefined attributes such as the application service type or the transport protocol of the application service.

In fact, an AEP is generally characterized by its IP address (or any other addressing identifier such as an URL, or an Internet address) and a set of attributes including the proposed application service and the transport protocol used to perform this service. As examples of AEP services, one can mention: streaming a video from an AEP which is a video server, providing access to a VPN via an AEP, TV streaming from an AEP, or performing a cloud application involving an AEP. Accordingly, as examples of AEPs grouping may be as follows:
- "voice group of AEPs" (distinguished on the basis of the proposed application type);
- "application over IP group of AEPs" or "application over UDP class of AEPs" (distinguished on the basis of the transport protocol of the proposed application);
- "video over IP group of AEPs", or "video over UDP group of AEPs" (distinguished on the basis of the proposed application type and the transport protocol).

The obtained AEPs groups (or classes) are provided to an Application Metric Mapping (AMM) module **11** configured to get the set of metrics to put into a multi-cost ALTO request depending on the AEP class or in several successive basic ALTO requests on one metric each. This multi-cost ALTO request is subsequently sent by an ALTO client **13** toward the ALTO server **2** (link **21** in figure 1). In this regard, the AMM module **11** comprises:
- a look-up table configured to map each AEP class to an AMM configuration pointer referring to predefined configuration data including cost metrics, for example, as follows
   *class_1* → *AMM_config_1,*
   *class_2* → *AMM_config_2,*
   *class_N* → *AMM_config_3*;
- a database **112** called "AMM active ALTO config values" configured to store the pointed active configuration values where each one is a set of one or more ALTO metric identifiers and their associated mode, for example, as follows:
   *AMM_config_1*={*metric_1, mode_1},*
   *AMM_config_2*=*{metric_2, mode_2};*
   *AMM_config_N*=*{(metric_2, mode_2), (metric_1, mode_1),* ...*};*

As an example of such configuration, one can mention *AMM_config_i*=*{(bandwidth score, numerical), (routing cost, numerical)}* where "*bandwidth score*" and "*routing cost*" are two illustrative ALTO metrics. "*numerical*" specifies the mode of the ALTO cost as numerical value, in alternative to a "*ordinal*" mode which looks at the rank of an AEP with respect to a given ALTO metric among other AEPs.

Given that a configuration value may change over time, this database **112** is further configured to store the other applicable values of a configuration and their applicable timeframe (i.e., a time-dependent configuration).

The ALTO server **2** gets from the ALTO client **13** the multi-cost ALTO request including a list of several candidate AEPs and a set of cost metrics with respect to which the ALTO server **2** is requested to provide the transport cost values. The ALTO server **2** also gets the "cost mode" in which the ALTO client **13** requests the values.

Further, the AAMS system **1** includes an Application Metric Mapping Configuration (AMMC) module **12** configured to define the possible values pointed by the AMM configurations (link **22** in figure 1) and when necessary sends updates (link **23** in figure 1) to the AMM module **11** as for the values or their timeframe.

Accordingly, a given AEP class *class_i* maps (almost always) to the same configuration pointer *AMM_config_i* and the look-up table only needs to be changed when new AEPs are included or when new AEP classes are defined. This is may be advantageous as the number of AEPs is usually huge in comparison with the number of classes that they may be classified therein. Thus, with a constant number of AEPs classes, what may change more often is the value of the configuration. For instance, these configuration values may change as follows:
- *{(bandwidth score, numerical), (routing cost, numerical)}* on day hours (notably, on busy hours); and
- *{routing cost, numerical}* on night hours during which bandwidth is highly available and no network maintenance is done.

The AMM module **11** is co-located with the ALTO client **13** that requests the ALTO values from the ALTO server **2** (link **21** in figure 1). Both, the AMM module **11** and the ALTO client **13** are interconnected with an ALTO agent **14** configured to know the semantics of ALTO, to use ALTO information, and to pass information and requests between the entities to which are linked. In fact, as depicted in figure1, the ALTO agent **14** communicates with the AEP gathering module **3**, the ALTO client **13**, the AMM module **11**, and a multi-criteria AEP ranking module **15.**

The multi-criteria AEP ranking module **15** is configured to perform the evaluation of the retuned value (link **21** in figure 1) by the ALTO server **2** to the server client **13** and the selection of at least an AEPs, among the group of candidate AEPs, on the basis of the requested cost metrics.

Multi-criteria AEP ranking module **15** requires ALTO transactions (i.e. request and response involving the ALTO client **13**), transmitted thereto through the ALTO agent **14**, to get the cost of an AEP with respect to a set of metrics that are suitable for this endpoint and the application.

The ALTO client **13**, the AMM module **11**, the ALTO agent **14** and the multi-criteria EP ranking module **15**, being connected via the ALTO agent **14** to the AEP gathering module **3**, are comprised within a system referred to in these embodiments as a "Multi-Cost ALTO extended AEP gathering module". In an illustrative embodiment, the Multi-Cost ALTO Client block is integrated within a DNS server following known integration schemes in the prior art (I. Poese et al., "Improving Content delivery with PaDIS", Internet Computing, May-June 2012, vol. 16 no. 3, pp 46-52).

The AMMC module **12** is included in an interface that manages the ALTO client **14.** In particular, this interface can (which may be either on the AMM module **11** or on another one):
- activate or deactivate ALTO when selecting AEPs;
- get from the serving ALTO server **2**, the set of supported ALTO metrics and their mode, by downloading the ALTO Information Resources Directory (IRD) (link **24** in figure 1). For instance, the AMMC module **12** may directly download the IRD by a HTTP "GET directory" request on the ALTO Server URL or include a simplified ALTO client;
- activate or deactivate the automation of ALTO metrics selection. In a manual metric selection mode, a person has to choose one or more metrics listed on this interface;
- upload, when necessary, the value of the AMM configurations associated to EP classes, or the time rules for these values (link **23** in figure 1).

In one embodiment, the AMM module **11** comprises
- a look-up table **111** that maps classes or groups of AEP identifiers to the pointer of a metric configuration:
   {@IP}_1 → AMM_config_1;
   {@IP}_2 → AMM_config_2;
   ...
   {@IP}_3 → AMM_config_3;
- a database 112 containing:
   ∘ the metric configuration identifiers and their currently applicable value ("AMM configuration values DB"): for instance, AMM_config_1={metric_1 ,mode_1}, AMM_config_2={metric_2, mode_2};
   ∘ the values of a configuration throughout time and the time plan for these values, namely the applicable timeframe of AMM_config_1 and AMM_config_2.

The AMMC module **12** is a metric configuration setting interface enabling
- a remote configuration on the side of the administrator of the AEP gathering module **3**;
- the issuing of request and response to the ALTO server **2** to get the ALTO server IRD, or involving an ALTO client **13** to get the ALTO IRD (through the link **21**);
- the sending of message to AMM active ALTO config database **112** to upload, update or activate applicable configuration values.

Advantageously, the disclosed embodiments are applicable to any ALTO client **13**, (i.e. whatever, basic or multi-cost capable ALTO client) to provide ultimately a multi-cost capable ALTO client supporting both the basic and multi-cost ALTO protocol. In fact, in opposition to the basic ALTO protocol wherein as many ALTO transactions as metrics are needed, with the above-described multi-cost ALTO extension, only one ALTO transactions is needed, unless the ALTO supports less metrics in a response as required by a multi-cost ALTO client.

Multi-Cost ALTO transactions are particularly advantageous for ALTO Client integrated in a DNS resolver or an authoritative DNS Server, given the number of requests they have to process. In fact, in one illustrative embodiment, the AMMC module **12** is a graphical User Interface (GUI) integrated in an end system also able to access the DNS Server and the AMM module **11** integrated in the DNS server. Via the GUI, the "ALTO ON" and the "ALTO auto metric" modes may be activated so that the AEPs gathered by the DNS resolver **3** are ranked by the multi-criteria AEP ranking module **15** with respect to the values of multiple metrics provided by the ALTO Server **2.**

Considering, now, the case of a video streaming application being requested by a client endpoint **4** in evening time, and that the candidate AEPs gathering module **3** has returned the IP addresses of 3 eligible AEPs (@IP1, @IP2 and @IP3) which are video streaming servers operated using TCP as a transport protocol which may be grouped into a single class "*video over IP*" class_4.

When reading the applicable AMM_config for class_4, the look-up table **111** maps the 3 AEPs class_4 to AMM-config_4. AMM-config_4 points at this time to the values stored in the AMM active ALTO config database **112** and are equal to: "{(routingcost, numerical), (bandwidth cost, numerical)}", which both are cost metrics supported by the Serving ALTO Server **2.** In this scenario, during low peak hours, the pointed value is equal to "{(routingcost, numerical)", because the AMM ALTO metric config database **112** stores a schedule for the pointed values. The schedule for the pointed values, the ALTO metric configuration updates are uploaded to the AMM ALTO metric config database **112** via setting GUI of the AMMC module **12.**

Subsequently, a multi-cost ALTO request is formulated, while taking into account the AMM active ALTO config values, by the ALTO client **13** toward the ALTO server **2** to obtain ALTO information on @IP1, @IP2 and @IP3.

The obtained response is transferred through ALTO agent **14** to the multi-criteria EP ranking **15** to get EP optimization input given the AMM active ALTO config values and ALTO responses, and to get ordered AEPs. These ordered AEPs are then provided to the client endpoint **4.**

By client endpoint **4** is meant, here, broadly and not restrictively, to include any end user equipment or software (such as network probing equipments, telephone handsets, smartphones, computers, personal digital assistants, mobile applications, or computer program products) capable of connecting to an AEP (i.e. a server, a data center, a cache, a server cluster, or more generally a source) providing an application service.

It is to be noted that application service providers (ASPs), such as CDN, may privilege their constraints and interests while selecting the appropriate servers, sometimes at the expenses of transport network providers and end users. Using ALTO may allow to share routing cost information with ISPs and to reduce them. In exchange, ISP may guide (ASPs) with respect to QoE impacting metrics which results in better application performance and customer satisfaction, harmonizing thus the interests of the three parties. Advantageously, an ALTO client augmented with multi-cost capabilities and an automated metric selection function, as described above, allows a better suitability of endpoints to applications. Besides, automation yields a faster and robust process.

Advantageously, the automatic metrics selection efficiently differentiates service quality of various applications that are not all sensitive to the same metrics or transport protocol. Further, it is worth noting that none of known solutions does implement a multi-cost capable ALTO client with automated metric selection.

Advantageously, the above-described method and system permit any DNS resolver management entity to guarantee that AEPs are selected with respect to criteria optimizing ASPs interests jointly with those of the users and the ISPs if the DNS resolver is managed by the ISP.

## Claims

1. A system for choosing at least a cost metric for an application endpoint selection in response to an application service request, this system comprising a look-up table (111) configured for mapping a group of candidate application endpoints for serving the application service request to a configuration pointer, this configuration pointer pointing to predefined configuration data, these predefined configuration data including at least a cost metric on the basis of which an application endpoint is to be selected among the group of candidate application endpoints, and the system further comprising an Application-Layer Traffic Optimization client (13) for formulating the pointed configuration data into a multi-cost metrics request or several single cost metric requests to be transmitted to an Application-Layer Traffic Optimization server (2).

2. The system of claim 1, further comprising a candidate application endpoint gathering module (3) configured to gather candidate application endpoints to serve an application service request.

3. The system of claim 2, wherein the candidate application endpoint gathering module is further configured to group gathered candidate application endpoints into groups of application endpoints according to predefined attributes.

4. The system of claim 3, wherein the predefined attributes includes the application service type and the transport protocol of the requested application service.

5. The system of any of the preceding claims, further comprising a multi-criteria application endpoint ranking module (15) configured to evaluate returned values by the Application-Layer Traffic Optimization server for the requested metrics in order to select an application endpoint among the group of candidate application endpoints.

6. The system of any of the preceding claims, further comprising a database (112) configured to store the pointed configuration data.

7. The system of claim 6, wherein the database (112) is further configured to store the applicable timeframe for the pointed configuration data.

8. The system of claim 7, further comprising an application metric mapping configuration module (12) configured to define and to update the configuration data and their applicable timeframe.

9. The system of claim 8, wherein the application metric mapping configuration module (12) is further configured to retrieve, from an Application-Layer Traffic Optimization server, information resources directory in order to get the set of supported cost metrics.

10. The system of any of the preceding claims, wherein the configuration data comprise a mode associated to the cost metric, said mode requesting a numeral value or a ranking for the cost metric.

11. The system of any of the preceding claims, wherein the cost metric is the bandwidth score and/or the routing cost.

12. A method for choosing at least a cost metric for an application endpoint selection in response to an application service request, this method comprising a mapping step of a group of candidate application endpoints for serving the application service request to a configuration pointer, this configuration pointer pointing to predefined configuration data, these predefined configuration data including at least a cost metric on the basis of which an application endpoint is to be selected among the group of candidate application endpoints, and further comprising a step of formulating, by an Application-Layer Traffic Optimization client, the pointed configuration data into a multi-cost metrics request or several single cost metric requests to be transmitted to an Application-Layer Traffic Optimization server.

13. The method of claim 12, further comprising the following steps:
- gathering candidate application endpoints to serve the application service request;
- grouping the gathered candidate application endpoints into groups of application endpoints according to predefined attributes ;
- evaluating the returned values by the Application-Layer Traffic Optimization server for the requested metrics in order to select an application endpoint among the group of candidate application endpoints.

## Patentansprüche

1. System zum Auswählen mindestens einer Kostenmetrik für eine Anwendungsendpunktauswahl in Reaktion auf eine Anwendungsdienstanforderung, wobei das System eine Nachschlagetabelle (111) umfasst, die zum Zuordnen einer Gruppe von Kandidatenanwendungsendpunkten zum Verarbeiten der Anwendungsdienstanforderung zu einem Konfigurationsverweis ausgestaltet ist, wobei der Konfigurationsverweis auf vordefinierte Konfigurationsdaten verweist, wobei die vordefinierten Konfigurationsdaten mindestens eine Kostenmetrik umfassen, auf deren Basis ein Anwendungsendpunkt aus der Gruppe von Kandidatenanwendungsendpunkten auszuwählen ist, und wobei das System ferner einen "Application-Layer Traffic Optimization"-Client (13) zum Formulieren der verwiesenen Konfigurationsdaten in eine Multikostenmetrikanforderung oder mehrere Einzelkostenmetrikanforderungen umfasst, die an einen "Application-Layer Traffic Optimization"-Server (2) zu senden sind.

2. System nach Anspruch 1, ferner umfassend ein Kandidatenanwendungsendpunkt-Beschaffungsmodul (3), das ausgestaltet ist, Kandidatenanwendungsendpunkte zum Verarbeiten einer Anwendungsdienstanforderung zu beschaffen.

3. System nach Anspruch 2, wobei das Kandidatenanwendungsendpunkt-Beschaffungsmodul ferner ausgestaltet ist, beschaffte Kandidatenanwendungsendpunkte in Gruppen von Anwendungsendpunkten gemäß vordefinierten Attributen zu gruppieren.

4. System nach Anspruch 3, wobei die vordefinierten Attribute den Anwendungsdiensttyp und das Transportprotokoll des angeforderten Anwendungsdiensts umfassen.

5. System nach einem der vorhergehenden Ansprüche, ferner umfassend ein Modul (15) zum Erstellen einer Rangfolge der Anwendungsendpunkte nach mehreren Kriterien, das ausgestaltet ist, durch den "Application-Layer Traffic Optimization"-Server zurückgegebene Werte für die angeforderten Metriken zu beurteilen, um einen Anwendungsendpunkt aus der Gruppe von Kandidatenanwendungsendpunkten auszuwählen.

6. System nach einem der vorhergehenden Ansprüche, ferner umfassend eine Datenbank (112), die ausgestaltet ist, die verwiesenen Konfigurationsdaten zu speichern.

7. System nach Anspruch 6, wobei die Datenbank (112) ferner ausgestaltet ist, den anwendbaren Zeitrahmen für die verwiesenen Konfigurationsdaten zu speichern.

8. System nach Anspruch 7, ferner umfassend ein Anwendungsmetrik-Zuordnungskonfigurationsmodul (12), das ausgestaltet ist, die Konfigurationsdaten und deren anwendbare Zeitrahmen zu definieren und zu aktualisieren.

9. System nach Anspruch 8, wobei das Anwendungsmetrik-Zuordnungskonfigurationsmodul (12) ferner ausgestaltet ist, von einem "Application-Layer Traffic Optimization"-Server ein Informationsressourcenverzeichnis abzufragen, um den Satz von unterstützten Kostenmetriken zu erhalten.

10. System nach einem der vorhergehenden Ansprüche, wobei die Konfigurationsdaten einen Modus in Zusammenhang mit der Kostenmetrik umfassen, wobei der Modus einen numerischen Wert oder eine Rangfolge für die Kostenmetrik anfordert.

11. System nach einem der vorhergehenden Ansprüche, wobei die Kostenmetrik die Bandbreitenzahl und/oder die Leitweglenkungskosten sind.

12. Verfahren zum Auswählen mindestens einer Kostenmetrik für eine Anwendungsendpunktauswahl in Reaktion auf eine Anwendungsdienstanforderung, wobei das Verfahren einen Zuordnungsschritt einer Gruppe von Kandidatenanwendungsendpunkten zum Verarbeiten der Anwendungsdienstanforderung zu einem Konfigurationsverweis umfasst, wobei der Konfigurationsverweis auf vordefinierte Konfigurationsdaten verweist, wobei die vordefinierten Konfigurationsdaten mindestens eine Kostenmetrik umfassen, auf deren Basis ein Anwendungsendpunkt aus der Gruppe von Kandidatenanwendungsendpunkten auszuwählen ist, und ferner umfassend einen Schritt Formulieren, durch einen "Application-Layer Traffic Optimization"-Client, der verwiesenen Konfigurationsdaten in eine Multikostenmetrikanforderung oder mehrere Einzelkostenmetrikanforderungen, die an einen "Application-Layer Traffic Optimization"-Server zu senden sind.

13. Verfahren nach Anspruch 12, ferner umfassend die folgenden Schritte,
- Beschaffen von Kandidatenanwendungsendpunkten zum Verarbeiten der Anwendungsdienstanforderung;
- Gruppieren der beschafften Kandidatenanwendungsendpunkte in Gruppen von Anwendungsendpunkten gemäß vordefinierten Attributen;
- Beurteilen der zurückgegebenen Werte durch den "Application-Layer Traffic Optimization"-Server für die angeforderten Metriken, um einen Anwendungsendpunkt aus der Gruppe von Kandidatenanwendungsendpunkten auszuwählen.

## Revendications

1. Système pour choisir au moins une mesure de coût pour une sélection de points terminaux d'application en réponse à une demande de service d'application, ce système comprenant une table de recherche (111) configurée pour mettre en correspondance un groupe de points terminaux d'application candidats pour servir la demande de service d'application avec un pointeur de configuration, ce pointeur de configuration pointant sur des données de configuration prédéfinies, ces données de configuration prédéfinies comprenant au moins une métrique de coût sur la base de laquelle un point terminal d'application doit être sélectionné parmi le groupe de points terminaux d'application candidats, et le système comprenant en outre un client d'optimisation du trafic de la couche application (13) pour formuler les données de configuration pointées en une demande de métrique de coût multiple ou plusieurs demandes de métrique de coût unique à transmettre à un serveur d'optimisation du trafic de la couche application (2).

2. Système selon la revendication 1, comprenant en outre un module de collecte de points terminaux d'application candidats (3) configuré pour collecter des points terminaux d'application candidats pour servir une demande de service d'application.

3. Système selon la revendication 2, le module de collecte des points terminaux d'application candidats étant en outre configuré pour regrouper les points terminaux d'application candidats collectés en groupes de points terminaux d'application selon des attributs prédéfinis.

4. Système selon la revendication 3, les attributs prédéfinis comprenant le type de service d'application et le protocole de transport du service d'application demandé.

5. Système selon l'une quelconque des revendications précédentes, comprenant en outre un module de classement multicritère des points terminaux d'application (15) configuré pour évaluer les valeurs renvoyées par le serveur d'optimisation du trafic de la couche application pour les mesures demandées afin de sélectionner un point terminal d'application parmi le groupe de points terminaux d'application candidats.

6. Système selon l'une quelconque des revendications précédentes, comprenant en outre une base de données (112) configurée pour stocker les données de configuration pointées.

7. Système selon la revendication 6, la base de données (112) étant en outre configurée pour stocker le cadre temporel applicable pour les données de configuration pointées.

8. Système selon la revendication 7, comprenant en outre un module de configuration de mise en correspondance de métrique d'application (12) configuré pour définir et mettre à jour les données de configuration et leur cadre temporel applicable.

9. Système selon la revendication 8, le module de configuration de mise en correspondance de métrique d'application (12) étant en outre configuré pour récupérer, à partir d'un serveur d'optimisation du trafic de la couche application, un répertoire de ressources d'information afin d'obtenir l'ensemble des métriques de coût prises en charge.

10. Système selon l'une quelconque des revendications précédentes, les données de configuration comprenant un mode associé à la métrique de coût, ledit mode demandant une valeur numérique ou un classement pour la métrique de coût.

11. Système selon l'une quelconque des revendications précédentes, la mesure de coût étant le score de bande passante et/ou le coût de routage.

12. Procédé pour choisir au moins une mesure de coût pour une sélection de points terminaux d'application en réponse à une demande de service d'application, ce procédé comprenant une étape de mise en correspondance d'un groupe de points terminaux d'application candidats pour servir la demande de service d'application à un pointeur de configuration, ce pointeur de configuration pointant sur des données de configuration prédéfinies, ces données de configuration prédéfinies comprenant au moins une métrique de coût sur la base de laquelle un point terminal d'application doit être sélectionné parmi le groupe de points terminaux d'application candidats, et comprenant en outre une étape de formulation, par un client d'optimisation du trafic de la couche application, des données de configuration pointées en une demande de métrique de coût multiple ou plusieurs demandes de métrique de coût unique à transmettre à un serveur d'optimisation du trafic de la couche application.

13. Procédé selon la revendication 12, comprenant en outre les étapes suivantes :
- collecte des points terminaux d'application candidats pour servir la demande de service d'application ;
- regroupement des points terminaux d'application candidats collectés en groupes de points terminaux d'application selon des attributs prédéfinis ;
- évaluation des valeurs renvoyées par le serveur d'optimisation du trafic de la couche application pour les mesures demandées afin de sélectionner un point terminal d'application parmi le groupe de points terminaux d'application candidats.
